# EUROPÄISCHE PATENTSCHRIFT

(11) **EP 1 861 223 B1**
(45) Veröffentlichungstag und Bekanntmachung des Hinweises auf die Patenterteilung: **22.09.2010**
(21) Anmeldenummer: 06704124.4
(22) Anmeldetag: 01.02.2006
(51) Int. Cl.: B23P 9/02, B24B 39/04, B24B 49/00, B21H 7/18, G01B 5/24, C21D 7/08

(54) **VERFAHREN UND VORRICHTUNG ZUM FESTWALZEN VON KURBELWELLEN**
METHOD AND DEVICE FOR DEEP ROLLING CRANKSHAFTS
PROCÉDÉ ET DISPOSITIF POUR LE GALETAGE DE VILEBREQUINS

(30) Priorität: 24.03.2005 DE 102005013637
(43) Veröffentlichungstag der Anmeldung: 05.12.2007
(73) Patentinhaber: Hegenscheidt-MFD GmbH & Co. KG, 41812 Erkelenz (DE)
(72) Erfinder: FREITAG, Ralf, 41517 Grevenbroich (DE); HEFFE, Roland, 41352 Korschenbroich (DE); HEIMANN, Alfred, 52078 Aachen (DE); NIJSSEN, Theo, NL-5954 Cj Beesel (NL); RISTERS, Frank, 41812 Erkelenz (DE); WINNERTZ, Jürgen, 41812 Erkelenz (DE)
(74) Vertreter: Cohausz & Florack
(86) Internationale Anmeldenummer: PCT/EP2006/050598
(87) Internationale Veröffentlichungsnummer: WO 2006/100149

(56) Entgegenhaltungen:
- EP-A- 1 262 280
- DE-A1- 3 625 961
- DE-A1- 19 511 882
- US-A- 4 870 845
- US-A1- 2002 083 751

## Beschreibung

Die Erfindung betrifft ein Verfahren zum Festwalzen der Einstiche oder Radien an den Übergängen zwischen Lagerzapfen und Wangen oder Flanschen von Kurbelwellen mit Hilfe eines in scherenartiger Bauweise ausgeführten Festwalzgeräts einer Festwalzmaschine mit zwei Scherenarmen, die über ein Drehgelenk gelenkig miteinander verbunden sind, wobei an den jeweils einander entsprechenden äußeren Enden der Scherenarme ein Festwalzrollenkopf und ein Stützrollenkopf als Teile eines Festwalzwerkzeugs beziehungsweise ein Kraftgerät zum Erzeugen der Festwalzkraft angeordnet sind.

Ein solches Verfahren und eine solche Vorrichtung sind aus EP 1 262 280 A1 und US 2002/0 083 751 A1 bekannt.

Ein vergleichbares Verfahren zum Verfestigen von Werkstückoberflächen ist beispielsweise aus der DE 195 11 882 B4 bekannt. Danach ist ein Verfahren zum Verfestigen von Werkstückoberflächen durch Erzeugen von Druckeigenspannung mittels verformender Werkzeuge und der messtechnischen Erfassung der Werkstückoberfläche bekannt, bei dem die Werkstückoberfläche während des Verfestigungsvorgangs messtechnisch erfasst wird und aus den Messergebnissen Regelgrößen zur Einstellung/Veränderung von Werkstückparametern abgeleitet werden. Zugleich ist eine Vorrichtung an einem Festwalzgerät bekannt, bei welcher im Festwalzwerkzeug ein pneumatischer Tastkopf federnd gelagert ist, welcher der Festwalzrolle diametral gegenüberliegend angeordnet ist.

Nachteilig an dem bekannten Verfahren und an der dafür vorgesehenen Vorrichtung ist zugleich, dass die Oberflächenkontur messtechnisch erfasst wird an einer Stelle des Werkstücks, hier der Kurbelwelle, in deren unmittelbarer Nähe die Teile des Festwalzwerkzeugs wirksam werden. Innerhalb der geringen Abmessungen, welche ein Festwalzwerkzeug aufweist, ist es schwierig noch zusätzlich ein Messgerät anzubringen. Ein dort untergebrachtes Werkzeug unterliegt besonders der Gefahr des Verschmutzens. Schließlich ist es viel genauer und direkter, die Wirkung des Festwalzwerkzeugs unmittelbar am Werkstück festzustellen und nicht über den Umweg von pneumatischen Medien.

Aus der DE 36 25 961 A1 ist beispielweise eine Prüfvorrichtung für die Rollgüte von sich drehenden Werkstücken bekannt, die während des Bearbeitungsvorgangs die Verformung an Ringflächen des zu rollenden, sich drehenden Werkstücks erfassen. Sensoren, bestehend aus einem Taster und einem Positionswandler, erzeugen ein elektrisches Signal, welches von der erfolgten plastischen Verformung abhängig ist, die Aufschluss über die Rollgüte gibt.

Aus der EP 1 262 280 A1 ist es ferner bekannt, die Eindringtiefe der Festwalzrollen in die Kurbelwelle in radialer Richtung zu messen. Danach wird die Größe der Festwalzkraft in Abhängigkeit von der gemessenen Eindringtiefe in der Weise geregelt, dass im Verlauf von einer Umdrehung der Kurbelwelle an wenigstens einem der beiden Einstiche oder Radien einer Lagerstelle nach dem Festwalzen eine plastische Verformung erhalten wird, die einer vorgegebenen Einwalztiefe entspricht.

Aus der US 4,870,845 ist eine Festwalzmaschine zum Festwalzen der Einstiche an den Haupt- und Hublagerzapfen von Kurbelwellen bekannt. Eine erste Festwalzrolle ist an einem ersten Haltearm vorgesehen und wird zum Festwalzen gegen einen Hauptlagerzapfen gepresst, während eine zweite Festwalzrolle an einem dritten Haltearm vorgesehen ist und zum Festwalzen gegen einen Hublagerzapfen gepresst wird. Die Festwalzkräfte an der ersten und zweiten Festwalzrolle werden ermittelt, indem man die Verlagerung eines ersten und zweiten Kraftorgans erfasst und die Kraftorgane in Abhängigkeit von den ermittelten Verlagerungen steuert.

Aus der US 2002/0083751 A1 ist eine Einrichtung zum Festwalzen der Einstiche an den Lagerzapfen von Kurbelwellen bekannt. Eine Mehrzahl von Gerätearmen sind entlang der Drehachse der zu bearbeitenden Kurbelwelle nebeneinander angeordnet. Jeder Gerätearm ist mit einem Festwalzwerkzeug und mit einem Kraftzylinder gegenüberliegend dem Festwalzwerkzeug zum Erzeugen der Festwalzkraft versehen. Auf der äußeren Längsseite eines jeden Gerätearms ist ein Sensor vorgesehen, welcher die Dehnung des Gerätearms unter der Festwalzkraft ermittelt. Aus den über den Sensor gewonnenen Messwerten wird sodann die Höhe der Festwalzkraft geregelt, die der betreffende Kraftzylinder erzeugt.

Daraus ergibt sich die Aufgabe, ein Verfahren und eine Vorrichtung vorzuschlagen, mit welchen sowohl die Eindringtiefe der Festwalzrollen in die Einstiche oder Radien der festzuwalzenden Kurbelwelle als auch die Festwalzkraft, die für das Eindringen der Festwalzrollen in die Radien oder Einstiche notwendig ist, in vereinfachter und gleichzeitig sicherer Weise zu erfassen.

Die Aufgabe wird durch die Merkmale der unabhängigen Ansprüche gelöst.

Erfindungsgemäß wird diese Aufgabe dadurch gelöst, dass man die Eindringtiefe der Festwalzrollen in die Einstiche oder Radien unter der Festwalzkraft durch Erfassen der gegenseitigen Stellung, welche die beiden Scherenarme momentan einnehmen, am Drehgelenk misst. Somit ist die Stelle, an welcher die Eindringtiefe gemessen wird, vom Ort, wo das Eindringen der Festwalzrollen stattfindet, ausreichend weit entfernt, um vor Verschmutzungen sicher zu sein, ohne den verfügbaren Einbauraum des Festwalzgeräts zu beeinträchtigen.

In geeigneter Weise wird demgegenüber die Festwalzkraft dadurch gemessen, dass man die Durchbiegung von einem der beiden Scherenarme unter der Festwalzkraft zwischen dem äußeren Ende, an dem das Kraftgerät angreift und dem Drehgelenk misst. Auch mit dieser Anordnung wird der für das Festwalzgerät in der Festwalzmaschine zur Verfügung stehende Raum optimal ausgenutzt und zugleich eine gute Zugänglichkeit zum Messort erhalten. Dank der hohen Auflösung moderner Messgeräte sind die erhaltenen Messwerte sehr genau und frei von irgendwelchen anderen Einflüssen aus der Maschine.

Die Messwerte der Eindringtiefe wie auch der Festwalzkraft werden einer gemeinsamen Auswertestation zugeführt und in Regelgrößen, entweder für die Eindringtiefe oder für die Festwalzkraft, umgewandelt, mit deren Hilfe sodann der gesamte Festwalzprozess mit großer Genauigkeit gesteuert werden kann.

Eine Vorrichtung zur Messung der Eindringtiefe sieht am Drehgelenk, zugehörig zu einem der beiden Scherenarme, ein Messband vor und zugehörig zu dem anderen Scherenarm einen Sensor, der die jeweilige Stellung des Messbandes erfasst.

Zur Messung der Festwalzkraft ist auf einer der beiden Längsseiten eines Scherenarms zwischen dem äußeren Ende, an dem das Kraftgerät angreift, und dem Drehgelenk ein Dehnmessstreifen angebracht, der die Durchbiegung des Scherenarms unter der Wirkung der Festwalzkraft misst.

Nachfolgend wird die Erfindung an einem Ausführungsbeispiel näher beschrieben.

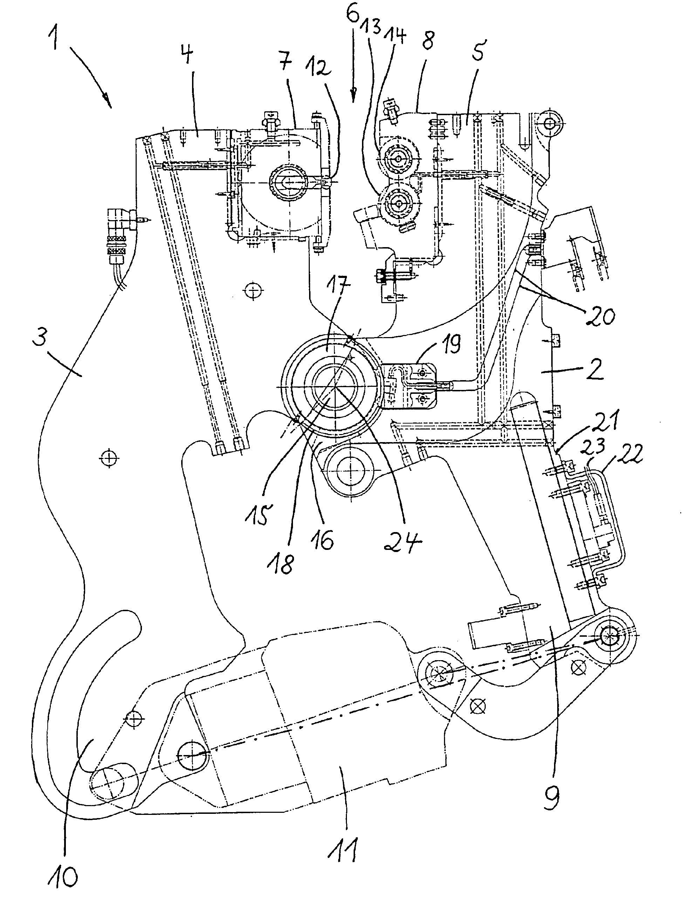

Die einzige Figur zeigt die wesentlichen Teile eines Festwalzgeräts in der Seitenansicht in verkleinertem Maßstab.

Das Festwalzgerät 1 ist in scherenartiger Bauweise ausgeführt. Es besteht aus den beiden Scherenarmen 2 und 3, die über das Drehgelenk 24 gelenkig miteinander verbunden sind. Zwischen den beiden einander zugeordneten ersten äußeren Enden 4 und 5 der Scherenarme 2 und 3 ist das Festwalzwerkzeug 6 mit seinen Teilen Festwalzrollenkopf 7 und Stützrollenkopf 8 angeordnet.

Zwischen den zweiten äußeren Enden 9 und 10 der beiden Scherenarme 2 und 3 befindet sich das Kraftgerät 11 zum Erzeugen der Festwalzkraft zwischen dem Festwalzrollenkopf 7 und dem Stützrollenkopf 8. Unter der Wirkung des Kraftgeräts 11 dringen Festwalzrollen 12 in die Einstiche oder Radien an den Lagerzapfen von Kurbelwellen (nicht gezeigt) ein, die gegenüber den Festwalzrollen 12 von den beiden Stützrollen 13 und 14 abgestützt werden. Dieser Vorgang ist dem einschlägigen Fachmann hinreichend bekannt, so dass darauf verzichtet werden kann, in der vorliegenden Beschreibung auf weitere Einzelheiten einzugehen.

Das Drehgelenk 24 wird von einem Bolzen 15 gebildet, der jeweils von Augen 16 und 17 eines der beiden Scherenarme 2 und 3 umschlossen wird. Auf dem Außenumfang des Auges 17 ist ein Messband 18 angeordnet, das einen großen Abschnitt des Außenumfangs des Auges 17 umfasst. An dem Scherenarm 2 ist ein Sensor 19 vorgesehen, der die jeweilige Stellung des Messbandes 18 und damit die Stellung der beiden Scherenarme 2 und 3 zueinander feststellt und über Anschlüsse 20 einer Auswerteeinheit (nicht gezeigt) übermittelt. Die messtechnische Auflösung dieser Anordnung ist ausreichend groß, um die Eindringtiefe der Festwalzrollen mit einer Genauigkeit zu ermitteln, welche in der Größenordnung zwischen 0,1 und 0,01 mm liegt.

Auf der Außenseite 21 des zweiten äußeren Endes 9 des Scherenarmes 2 ist ein weiteres Messgerät 22 vorgesehen. Im Inneren des Messgeräts 22 befinden sich Dehnmessstreifen (nicht gezeigt), die auf der Oberfläche der Außenseite 21 angebracht sind. Unter der Wirkung der Festwalzkraft des Kraftgeräts 11 erfährt das zweite äußere Ende des Scherenarms 2 eine Durchbiegung. Diese Durchbiegung ist proportional der Höhe der Festwalzkraft. Durch das Messen der Durchbiegung mit dem Messgerät 22 erhält man folglich einen Messwert, welcher der Höhe der Festwalzkraft entspricht. Über Anschlüsse 23 ist auch das Messgerät 22 mit der bereits erwähnten Auswerte- und Regelstation verbunden.

### Bezugszeichenliste

- 1: Festwalzgerät
- 2: Scherenarm
- 3: Scherenarm
- 4: erstes äußeres Ende
- 5: erstes äußeres Ende
- 6: Festwalzwerkzeug
- 7: Festwalrollenkopf
- 8: Stützrollenkopf
- 9: zweites äußeres Ende
- 10: zweites äußeres Ende
- 11: Kraftgerät
- 12: Festwalzrolle
- 13: Stützrolle
- 14: Stützrolle
- 15: Bolzen
- 16: Auge
- 17: Auge
- 18: Messband
- 19: Sensor
- 20: Anschluss
- 21: Außenseite
- 22: Messgerät
- 23: Anschluss
- 24: Drehgelenk

## Patentansprüche

1. Verfahren zum Festwalzen der Einstiche oder Radien an den Übergängen zwischen Lagerzapfen und Wangen oder Flanschen von Kurbelwellen mit Hilfe eines in scherenartiger Bauweise ausgeführten Festwalzgeräts (1) einer Festwalzmaschine mit zwei Scherenarmen (2,3), die über ein Drehgelenk (24) gelenkig miteinander verbunden sind, wobei an den jeweils einander entsprechenden äußeren Enden (4,5) der Scherenarme (2,3) ein Festwalzrollenkopf (7) und ein Stützrollenkopf (8) als Teile eines Festwalzwerkzeugs (6) bzw. ein Kraftgerät (11) zum Erzeugen der Festwalzkraft angeordnet sind, **dadurch gekennzeichnet, dass** man die Eindringtiefe der Festwalzrollen (12) in die Einstiche oder Radien unter der Festwalzkraft durch Erfassen der gegenseitigen Stellung, welche die beiden Scherenarme (2,3) momentan einnehmen, am Drehgelenk (24) misst.

2. Verfahren zum Festwalzen der Einstiche oder Radien an den Übergängen zwischen Lagerzapfen und Wangen oder Flanschen von Kurbelwellen mit Hilfe eines in scherenartiger Bauweise ausgeführten Festwalzgeräts (1) einer Festwalzmaschine mit zwei Scherenarmen (2,3), die über ein Drehgelenk (24) gelenkig miteinander verbunden sind, wobei an den jeweils einander entsprechenden äußeren Enden (4,5) der Scherenarme (2,3) ein Festwalzrollenkopf (7) und ein Stützrollenkopf (8) als Teile eines Festwalzwerkzeugs (6) bzw. ein Kraftgerät (11) zum Erzeugen der Festwalzkraft angeordnet sind, **dadurch gekennzeichnet, dass** man die Durchbiegung von einem der beiden Scherenarme (2,3) unter der Festwalzkraft zwischen seinem äußeren Ende (9,10), an dem das Kraftgerät (11) angreift, und dem Drehgelenk (24) misst.

3. Verfahren nach den Ansprüchen 1 und 2, **dadurch gekennzeichnet, dass** man die Eindringtiefe und die Festwalzkraft gleichzeitig misst.

4. Verfahren nach Anspruch 1, **dadurch gekennzeichnet, dass** man aus der gemessenen Eindringtiefe die Höhe der Festwalzkraft regelt.

5. Verfahren nach Anspruch 2, **dadurch gekennzeichnet, dass** man mit der gemessenen Festwalzkraft die Eindringtiefe regelt.

6. Vorrichtung zur Durchführung des Verfahrens nach Anspruch 1, umfassend ein in scherenartiger Bauweise ausgeführtes Festwalzgerät (1) einer Festwalzmaschine mit zwei Scherenarmen (2,3), die über ein Drehgelenk (24) gelenkig miteinander verbunden sind, wobei an den jeweils einander entsprechenden äußeren Enden (4,5) der Scherenarme (2,3) ein Festwalzrollenkopf (7) und ein Stützrollenkopf (8) als Teile eines Festwalzwerkzeugs (6) bzw. ein Kraftgerät (11) zum Erzeugen der Festwalzkraft angeordnet sind, **dadurch gekennzeichnet, dass** am Drehgelenk (24) zugehörig zu einem der beiden Scherenarme (2, 3) ein Messband (18) und zugehörig zu dem anderen Scherenarm (2, 3) ein Sensor (19) vorgesehen ist, der die jeweilige Stellung des Messbandes (18) erfasst.

7. Vorrichtung zur Durchführung des Verfahrens nach Anspruch 2, umfassend ein in scherenartiger Bauweise ausgeführtes Festwalzgerät (1) einer Festwalzmaschine mit zwei Scherenarmen (2,3), die über ein Drehgelenk (24) gelenkig miteinander verbunden sind, wobei an den jeweils einander entsprechenden äußeren Enden (4,5) der Scherenarme (2,3) ein Festwalzrollenkopf (7) und ein Stützrollenkopf (8) als Teile eines Festwalzwerkzeugs (6) bzw. ein Kraftgerät (11) zum Erzeugen der Festwalzkraft angeordnet sind, **dadurch gekennzeichnet, dass** auf einer der beiden Längsseiten (21) eines Scherenarmes (2, 3) zwischen seinem äußeren Ende (9,10), an dem das Kraftgerät (11) angreift, und dem Drehgelenk (24) ein Dehnmessstreifen (22) zur Messung der Durchbiegung angeordnet ist.

8. Vorrichtung nach den Ansprüchen 6 und 7, **dadurch gekennzeichnet, dass** die Messwerte der Eindringtiefe und der Festwalzkraft einer gemeinsamen Auswertestation zugeführt werden, die den Festwalzprozess überwacht und steuert.

## Claims

1. Procedure for deep rolling the recesses or radii on the transitions between bearing trunnions and webs or flanges of crankshafts using the shear-type construction deep rolling unit (1) of a deep rolling machine with two shearing arms (2,3) which are connected to one another via an articulated joint (24). On the respective reciprocal outer ends (4, 5) of the shearing arms (2,3), a deep rolling head (7) and a support roller head (8) are arranged as parts of a deep rolling tool (6) or a power unit (11) to generate the deep rolling force. This procedure is **characterised in that** the engaging depth of the deep rollers (12) into the recesses or radii subject to the deep rolling force is measured at the articulated joint by measuring the reciprocal position which the two shearing arms (2,3) momentarily occupy.

2. Procedure for deep rolling the recesses or radii on the transitions between bearing trunnions and webs or flanges of crankshafts using the shear-type construction deep rolling unit (1) of a deep rolling machine with two shearing arms (2,3) which are connected to one another via an articulated joint (24). On the respective
reciprocal outer ends (4,5) of the shearing arms (2,3), a deep rolling head (7) and a support roller head (8) are arranged as parts of a deep rolling tool (6) or a power unit (11) to generate the deep rolling force. This procedure
is **characterised in that** the deflection of one of the two shearing arms (2,3) subject to the deep rolling force is measured between its outer end (9,10), which is attached to the power unit (11), and the articulated joint (24).

3. Procedure in accordance with claims 1 and 2, **characterised**
**in that** the engaging depth and the deep rolling force are measured simultaneously.

4. Procedure in accordance with claim 1, **characterised in that** the level of the deep rolling force is controlled using the measured engaging depth.

5. Procedure in accordance with claim 2, **characterised in that** the engaging depth is controlled using the measured deep rolling force.

6. Device for implementation of the procedure in accordance with claim 1, comprising a shear-type construction deep rolling unit (1) of a deep rolling machine with two shearing arms (2,3) which are connected to one another via an articulated joint (24). On the respective reciprocal outer ends (4,5) of the shearing arms (2,3), a deep rolling head (7) and a support roller head (8) are arranged as parts of a deep rolling tool (6) or a power unit (11) to generate the deep rolling force. The device is **characterised in that** a measuring tape (18) appendant to one of the two shearing arms (2, 3) and a sensor (19) appendant to the other shearing arm (2, 3), are included on the articulated joint (24). The sensor is intended to measure the respective position of the measuring tape (18).

7. Device for implementation of the procedure in accordance with claim 2, comprising a shear-type construction deep rolling unit (1) of a deep rolling machine with two shearing arms (2,3) which are connected to one another via an articulated joint (24). On the respective reciprocal outer ends (4, 5) of the shearing arms (2,3), a deep rolling head (7) and a support roller head (8) are arranged as parts of a deep rolling tool (6) or a power unit (11) to generate the deep rolling force.
The device is **characterised in that** a wire strain gauge (22) for measuring the deflection is attached to one of the two long sides (21) of a shearing arm (2,3) between its outer end (9,10), which is attached to the power unit (11), and the articulated joint (24).

8. Device in accordance with claims 6 and 7, **characterised in that** the measured values for the engaging depth and the deep rolling force are fed to a common evaluation station, which monitors and controls the deep rolling process.

## Revendications

1. Procédé pour le galetage des entailles ou des rayons au niveau des transitions entre les tourillons et les parois ou les brides de vilebrequins à l'aide d'un appareil de galetage (1), conçu selon une structure articulée, d'une machine de galetage présentant deux bras articulés (2,3), qui sont reliés ensemble de manière articulée par le biais d'une articulation tournante (24), de sorte qu'aux extrémités extérieures respectives correspondantes (4,5) des bras articulés (2,3), une tête de galet de galetage (7) et une tête de galet d'appui (8) sont disposées comme parties d'un outil de galetage (6) ou bien d'un groupe moteur (11) destiné à fournir la force de galetage, **caractérisé**
**en ce que** l'on mesure au niveau de l'articulation tournante la profondeur de pénétration des galets (12) dans les entailles ou les rayons sous la force de galetage par l'enregistrement de la position mutuelle que les deux bras articulés (2,3) occupent momentanément.

2. Procédé pour le galetage des entailles ou des rayons au niveau des transitions entre les tourillons et les parois ou les brides de vilebrequins à l'aide d'un appareil de galetage (1), conçu selon une construction articulée, d'une machine de galetage présentant deux bras articulés (2,3), qui sont reliés ensemble de manière articulée par le biais d'une articulation tournante (24), de sorte qu'aux extrémités extérieures respectives correspondantes (4,5) des bras articulés (2,3), une tête de galet de galetage (7) et une tête de galet d'appui (8) sont disposées comme parties d'un outil de galetage (6) ou bien d'un groupe moteur (11) destiné à fournir la force de galetage, **caractérisé**
**en ce que** l'on mesure la flexion de l'un des deux bras articulés (2,3) sous la force de galetage entre son extrémité extérieure (9,10), au niveau de laquelle le groupe moteur (11) s'applique, et l'articulation tournante (24).

3. Procédé selon les revendications 1 et 2, **caractérisé en ce que** la profondeur de pénétration et la force de galetage sont mesurées simultanément.

4. Procédé selon la revendication 1, **caractérisé en ce que** la hauteur de la force de galetage est réglée à partir de la profondeur de pénétration mesurée.

5. Procédé selon la revendication 2, **caractérisé en ce que** la profondeur de pénétration est réglée avec la force de galetage mesurée.

6. Dispositif destiné à la mise en oeuvre du procédé selon la revendication 1, comprenant un appareil de galetage (1), conçu selon une structure articulée, d'une machine de galetage présentant deux bras articulés (2,3), qui sont reliés ensemble de manière articulée par le biais d'une articulation tournante (24), de sorte qu'aux extrémités extérieures respectives correspondantes (4,5) des bras articulés (2,3), une tête de galet de galetage (7) et une tête de galet d'appui (8) sont disposées comme parties d'un outil de galetage (6) ou bien d'un groupe moteur (11) destiné à fournir la force de galetage, **caractérisé en ce qu'**au niveau de l'articulation tournante (24) se trouve une bande de mesure (18) appartenant à l'un des deux bras articulés (2,3), et qu'un capteur (19) appartenant à l'autre bras articulé (2,3) est prévu, dont le rôle est d'enregistrer la position respective de la bande de mesure (18).

7. Dispositif destiné à la mise en oeuvre du procédé selon la revendication 2, comprenant un appareil de galetage (1), conçu selon une structure articulée, d'une machine de galetage présentant deux bras articulés (2,3), qui sont reliés ensemble de manière articulée par le biais d'une articulation tournante (24), de sorte qu'aux extrémités extérieures respectives correspondantes (4,5) des bras articulés (2,3), une tête de galet de galetage (7) et une tête de galet d'appui (8) sont disposées comme parties d'un outil de galetage (6) ou bien d'un groupe moteur (11) destiné à fournir la force de galetage, **caractérisé en ce qu'**au niveau de l'un des deux côtés longitudinaux (21) de l'un des bras articulés (2,3) entre son extrémité extérieure (9,10), au niveau de laquelle le groupe moteur (11) s'applique et l'articulation tournante (24), est disposé un extensomètre (22), dont le rôle est de mesurer la flexion.

8. Dispositif selon les revendications 6 et 7, **caractérisé en ce que** les valeurs mesurées de la profondeur de pénétration et de la force de galetage sont transmises à une station d'analyse commune dont le rôle est de surveiller et de commander le processus de galetage.
